# EUROPEAN PATENT APPLICATION

(11) **EP 4 527 585 A1**
(43) Date of publication of application: **26.03.2025**
(21) Application number: 24200584.1
(22) Date of filing: 16.09.2024
(51) Int. Cl.: B29B 17/00, C08J 11/06

(54) **DEODORIZED RECYCLED POLYPROPYLENE AND/OR POLYETHYLENE GRANULE OR AGGLOMERATE**

(30) Priority: 18.09.2023 IT 202300019146
(71) Applicant: SERMAG S.r.l., 20124 Milano (IT); Italrec S.r.l., 24050 Spirano (Bergamo) (IT)
(72) Inventor: ROSMINO, Andrea, 16146 GENOVA (IT); PASSERA, Gian Luigi, 24050 SPIRANO (Bergamo) (IT)
(74) Representative: Aseglio-Gianinet, Romina

(57) **Abstract**

The present invention relates to a deodorized recycled granule or agglomerate comprising a deodorized recycled polymer, a coloring substance and a virgin polymer; wherein the deodorized recycled polymer is present in a concentration of between 100% by weight and 30% by weight, the coloring substance is present in a concentration of between 0% by weight and 5% by weight, and the virgin polymer is present in a concentration of between 0% by weight and 65% by weight, the % being expressed in relation to the total weight of the granule or agglomerate; wherein the deodorized recycled polymer comprises a concentration of volatile and/or semi-volatile substance, preferably odorous, of between 0.01% by weight and 0.40% by weight, the % being expressed in relation to the total weight of the deodorized recycled polymer. The granule or agglomerate according to the present invention has the advantages of being a granule or agglomerate that is both homogeneous from a structural point of view and provided with a good processability index.

## Description

### Field of the invention

The present invention relates to a deodorized recycled granule or agglomerate, in particular relates to a deodorized recycled granule or agglomerate comprising a deodorized recycled polymer, a coloring substance and a virgin polymer.

### Prior art

In 2021, humanity generated 139 million tons of single-use plastics waste, 6 million more than two years earlier. For the most part, this is so-called "virgin plastics," i.e., plastics made from fossil fuels. Life cycle greenhouse gas emissions from these plastics reach 450 million tons of CO2 equivalent. Furthermore, once used, these plastics materials, which become waste, are often dispersed in the wild and/or at sea, causing considerable pollution.

Most of the aforesaid plastics waste is composed of the following polymers: HDPE (high-density polyethylene), LDPE (low-density polyethylene), PP (polypropylene), PS (polystyrene or styrofoam).

Recycling (i.e., as known to those skilled in the art, the reuse of scrap or waste materials from previous production processes) of plastics materials, and therefore of their polymers, is an excellent way to reduce pollution, save raw materials and protect the environment from the negative effects of the dispersion of waste in nature and at sea. This position is also confirmed by directives of the European Community, which adopted an action plan in 2015 with the aim of facilitating Europe's transition to a circular economy, where waste is not simply disposed of but sent for recycling, in order to become secondary raw material for further production.

As known to those skilled in the art, to date there are various methods for recycling plastics materials (and therefore their polymers) that allow new products to be obtained, but also energy, heat and electricity. By means of mechanical recycling, for example, plastics materials are treated and transformed into new products. Waste-to-energy, on the other hand, allows energy to be recovered through specific selection and shredding treatments, obtaining alternative fuels from the plastics materials, which are then used for the production of thermoelectric energy or in other industrial processes. A process still under development, however, is chemical recycling, which involves returning to the basic raw material through the transformation of plastics materials into monomers of the same quality as virgin ones.

To date, however, one of the disadvantages of these methods for the recycling of plastics materials that allow new products to be obtained, such as the recycling of plastics materials composed of polypropylene (PP), which materials, starting from waste from municipal waste sorting that contains PP, make it possible to obtain recycled polypropylene that may be used for the production of new material, consists in the poor quality of the recycled material obtained. Returning in fact to the aforementioned example of recycling waste from municipal waste sorting that contains PP, the recycled polypropylene that is obtained through the recycling processes currently present in the prior art leads to the production of a recycled PP that is difficult to process. In fact, the resulting recycled material often contains a large concentration of preferably odorous volatile and/or semi-volatile substances inside that make the recycled material non-uniform from a structural point of view and with a poor processability index, which make it unsuitable for easy processing by extrusion or in an injection molding process or in a blow molding process or in a coating process.

There is therefore a need in the market for a recycled material that is structurally homogeneous and has a good processability index at the end of the recycling process.

### Summary of the invention

The object of the present invention is therefore to provide a recycled material that is homogeneous from a structural point of view and has a good processability index.

This object is achieved by a deodorized recycled granule or agglomerate as outlined in the appended claims, the definitions of which form an integral part of the present description.

### Brief description of the figures

The invention will be better understood from the following detailed description of preferred embodiments thereof, given by way of non-limiting example and with reference to the accompanying figures, in which:
- Fig. 1 shows on the left a deodorized recycled granule or agglomerate according to the present invention, in particular a deodorized recycled polypropylene according to the present invention, and on the right a recycled but non-deodorized granule or agglomerate, in particular a recycled but non-deodorized polypropylene;
- Fig. 2 shows a recycled but non-deodorized granule or agglomerate, in particular recycled but non-deodorized polypropylene, in the form of a pressed disk;
- Fig. 3 shows a deodorized recycled granule or agglomerate according to the present invention, in particular deodorized recycled polypropylene according to the present invention, in the form of a pressed disk;
- Fig. 4 shows a recycled but non-deodorized granule, in particular recycled but non-deodorized high-density polyethylene (HDPE), in the form of a pressed disk;
- Fig. 5 shows a deodorized recycled granule according to the present invention, in particular deodorized recycled HDPE according to the present invention, in the form of a pressed disk;
- Fig. 6 shows an inner wall of a tank obtained using the deodorized recycled granule according to the present invention;
- Fig. 7 shows a detail of one of the outer walls of the tank of Fig. 6;
- Fig. 8 is a perspective view of the outside of a tank obtained using the deodorized recycled granule according to the present invention;
- Fig. 9 shows a DSC thermogram of a non-deodorized recycled HDPE sample;
- Fig. 10 shows a DSC thermogram of a deodorized recycled HDPE sample according to the present invention;
- Fig. 11 shows a DSC thermogram of a non-deodorized recycled PP sample;
- Fig. 12 shows a DSC thermogram of a deodorized recycled PP sample according to the present invention;
- Fig. 13 shows the flow curves at 220°C of a recycled but non-deodorized HDPE sample and of a deodorized recycled HDPE sample according to the present invention;
- Fig. 14 shows the flow curves at 220°C of a non-deodorized recycled PP sample and of a deodorized recycled PP sample according to the present invention;
- Fig. 15 shows the pressure trend recorded during rheological measurements at 220°C of a non-deodorized recycled HDPE sample and of a deodorized recycled HDPE sample according to the present invention;
- Fig. 16 shows the pressure trend recorded during rheological measurements at 220°C of a non-deodorized recycled PP sample and of a deodorized recycled PP sample according to the present invention;
- Fig. 17 shows the melt strength at 220°C of a recycled but non-deodorized HDPE sample and of a deodorized recycled HDPE sample according to the present invention;
- Fig. 18 shows the melt strength at 220°C of a recycled but non-deodorized PP sample and a deodorized recycled PP sample according to the present invention.

### Detailed description of the invention

A first subject matter of the present invention relates to a deodorized recycled granule or agglomerate comprising a deodorized recycled polymer, a coloring substance and a virgin polymer; wherein the deodorized recycled polymer is present in a concentration of between 100% by weight and 30% by weight, the coloring substance is present in a concentration of between 0% by weight and 5% by weight, and the virgin polymer is present in a concentration of between 0% by weight and 65% by weight, the % being expressed in relation to the total weight of the granule or agglomerate; wherein the deodorized recycled polymer comprises a concentration of volatile and/or semi-volatile substance, preferably odorous, of between 0.01% by weight and 0.40% by weight, the % being expressed in relation to the total weight of the deodorized recycled polymer.

Preferably, the deodorized recycled polymer comprises a concentration of volatile and/or semi-volatile substance, preferably odorous, of between 0.05% by weight and 0.30% by weight, the % being expressed in relation to the total weight of the deodorized recycled polymer. Even more preferably, between 0.10% by weight and 0.20% by weight.

With reference to this description and the accompanying claims, the term "recycled granule or agglomerate" means a granule or agglomerate that is the product of a recycling process.

With reference to this description and the accompanying claims, the term "deodorized recycled granule or agglomerate" means a granule or agglomerate that is the product of a recycling process, wherein the product of the recycling process comprises a concentration of volatile and/or semi-volatile substances, preferably odorous, that is preferably lower than that of the same material before having been subjected to a conventional recycling process.

With reference to this description and the accompanying claims, the term "virgin polymer" means a polymer made from fossil fuels, and therefore is not the product of a recycling process.

According to a preferred embodiment of the granule or agglomerate according to the present invention, the deodorized recycled polymer is preferably present in a concentration of between 100% by weight and 30% by weight, the coloring substance is preferably present in a concentration of between 0.01% by weight and 4.99% by weight, and the virgin polymer is preferably present in a concentration of between 0.01% by weight and 64.99% by weight, the % being expressed in relation to the total weight of the granule or agglomerate.

Even more preferably, the deodorized recycled polymer is preferably present in a concentration of between 100% by weight and 30% by weight, the coloring substance is preferably present in a concentration of between 0.1% by weight and 4.9% by weight, and the virgin polymer is preferably present in a concentration of between 0.1% by weight and 64.9% by weight, the % being expressed in relation to the total weight of the granule or agglomerate.

With reference to this description and the accompanying claims, the concept of "deodorized recycled polymer comprises a concentration of volatile and/or semi-volatile substance, preferably odorous" means a deodorized recycled polymer that preferably incorporates preferably odorous volatile and/or semi-volatile substances into its three-dimensional structure and/or is chemically bonded with one or more weak and/or strong chemical bonds to preferably odorous volatile and/or semi-volatile substances.

With reference to this description and the accompanying claims, the term "odorous volatile and/or semi-volatile substance" means an odorous substance, i.e., a chemical having a certain odor. As known to those skilled in the art, a chemical compound has a smell when it is volatile enough to be transported to a person's olfactory system in the upper part of their nose.

Preferably, the volatile and/or semi-volatile odorous substances according to the present invention belong to the following listed categories: esters, linear terpenes, cyclic terpenes, aromatic compounds, amines or mixtures thereof. Even more preferably, the odorous volatile and/or semi-volatile substances are selected from: geranyl acetate, methyl formate, methyl acetate, methyl propionate, methyl butyrate, methyl butanoate, ethyl acetate, ethyl butyrate, ethyl butanoate, isoamyl acetate, pentyl butyrate, pentyl butanoate, pentyl pentanoate, octyl acetate, benzyl acetate, methyl anthranilate, myrcene, geraniol, nerol, citral, lemonal, geranial, neral, citronellal, citronellol, linalol, nerolidol, lemonene, camphor, menthol, carvone, α-terpineol, ionone, tujone, benzaldehyde, eugenol, cinnamic aldehyde, ethyl maltol, vanillin, anisole, anethole, estragole, thymol, trimethylamine, putrescein, diaminobutane, cadaverine, pyridine, indole, skatole or mixtures thereof.

According to a preferred embodiment of the granule or agglomerate according to the present invention, the deodorized recycled polymer is preferably selected from: deodorized recycled high-density polyethylene, deodorized recycled polypropylene, deodorized recycled low-density polyethylene, recycled polystyrene, or mixtures thereof. Even more preferably, the deodorized recycled polymer is selected from: deodorized recycled high-density polyethylene, and deodorized recycled polypropylene.

According to a preferred embodiment of the granule or agglomerate according to the present invention, the virgin polymer is preferably selected from: high-density polyethylene, polypropylene, low-density polyethylene, polystyrene, or mixtures thereof. Even more preferably, the virgin polymer is selected from: high-density polyethylene, and polypropylene.

According to a preferred embodiment of the granule or agglomerate according to the present invention, the coloring substance is preferably selected from: pigment, dye or mixtures thereof.

According to a preferred embodiment of the granule or agglomerate according to the present invention, the deodorized recycled polymer is preferably present in a concentration of between 95% by weight and 30% by weight, the coloring substance is preferably present in a concentration of 5% by weight, and the virgin polymer is preferably present in a concentration of between 0% by weight and 65% by weight, the % being expressed in relation to the total weight of the granule or agglomerate.

According to a preferred embodiment of the granule or agglomerate according to the present invention, the deodorized recycled polymer is preferably present in a concentration of between 70% by weight and 30% by weight, the coloring substance is preferably present in a concentration of 5% by weight, and the virgin polymer is preferably present in a concentration of between 25% by weight and 65% by weight, the % being expressed in relation to the total weight of the granule or agglomerate.

According to a preferred embodiment of the granule or agglomerate according to the present invention, the deodorized recycled polymer is preferably present in a concentration of between 50% by weight and 30% by weight, the coloring substance is preferably present in a concentration of 5% by weight, and the virgin polymer is preferably present in a concentration of between 45% by weight and 65% by weight, the % being expressed in relation to the total weight of the granule or agglomerate.

According to a preferred embodiment of the granule or agglomerate according to the present invention, the deodorized recycled polymer is preferably present in a concentration of 100% by weight, the % being expressed in relation to the total weight of the granule or agglomerate.

According to a preferred embodiment of the granule or agglomerate according to the present invention, the deodorized recycled polymer is preferably present in a concentration of 95% by weight, and the coloring substance is preferably present in a concentration of 5% by weight, the % being expressed in relation to the total weight of the granule or agglomerate.

According to a preferred embodiment of the granule or agglomerate according to the present invention, the deodorized recycled polymer is preferably present in a concentration of 70% by weight, the coloring substance is preferably present in a concentration of 5% by weight, and the virgin polymer is preferably present in a concentration of 25% by weight, the % being expressed in relation to the total weight of the granule or agglomerate.

According to a preferred embodiment of the granule or agglomerate according to the present invention, the deodorized recycled polymer is preferably present in a concentration of 50% by weight, the coloring substance is preferably present in a concentration of 5% by weight, and the virgin polymer is preferably present in a concentration of 45% by weight, the % being expressed in relation to the total weight of the granule or agglomerate.

According to a preferred embodiment of the granule or agglomerate according to the present invention, the deodorized recycled polymer is preferably present in a concentration of 30% by weight, the coloring substance is preferably present in a concentration of 5% by weight, and the virgin polymer is preferably present in a concentration of 65% by weight, the % being expressed in relation to the total weight of the granule or agglomerate.

A second subject matter of the present invention relates to the use of a deodorized recycled granule or agglomerate as described above for the production of plastics materials. Preferably, for the production of industrial plastics materials, such as for example for the packaging industry, manufacturing industry, agriculture, mining and energy industry, service industry, automotive industry, construction industry, and furniture industry.

### Examples

Some preferred exemplary embodiments of the present invention are now provided, given by way of non-limiting example.

### Example 1: Analysis of the fluidity index of the deodorized recycled granule or agglomerate according to the present invention and of a recycled but non-deodorized granule or agglomerate; (PP).

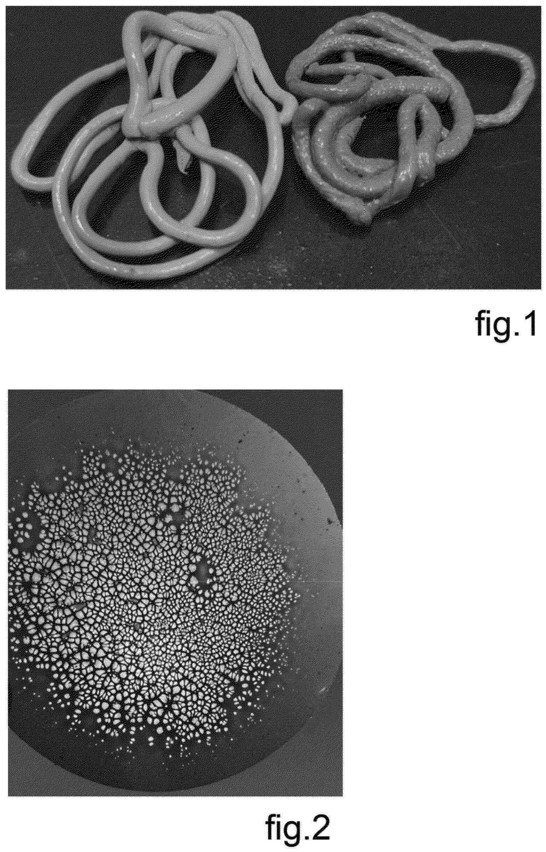

With reference to Fig. 1, the comparison is shown between, on the left, a deodorized recycled granule or agglomerate according to the present invention, in particular a deodorized recycled polypropylene, and on the right, a recycled but non-deodorized granule or agglomerate, in particular a recycled but non-deodorized polypropylene. From Fig. 1 it may be seen how the granule or agglomerate according to this invention has a smoother and more uniform structural appearance, whereas the recycled but non-deodorized granule or agglomerate has a rough and non-homogeneous structural appearance. The two compounds were both analyzed in order to measure their fluidity index; as is known to a person skilled in the art, the fluidity index is the index of the ease of flow of a molten polymer; the measurement thereof is carried out by loading the molten polymer at a certain temperature into a heated barrel to which a cylinder is fixed (diameter 2.095 mm and length 8 mm), which exerts a constant force and causes the polymer to flow through a capillary; the mass (expressed in grams) of polymer that comes out in 10 minutes corresponds to the processability index value. The greater the mass of material that comes out, the greater the fluidity index and the lower the viscosity of the polymer. The operating temperature and the mass of the cylinder are set by the standards depending on the type of material to be tested. The two granules or agglomerates (the recycled and deodorized granule or agglomerate and the recycled but non-deodorized granule or agglomerate) have the same fluidity index. For the same fluidity, what varies is the roughness of the granule or agglomerate; from Fig. 1 it is in fact possible to observe how the recycled but non-deodorized granule or agglomerate has a very accentuated roughness, whereas the recycled and deodorized granule or agglomerate is devoid of roughness (its outer surface is in fact smooth). The roughness of the recycled but non-deodorized granule or agglomerate indicates the presence within the granule or agglomerate of volatile and/or semi-volatile substances that have been trapped within the granule or agglomerate, which substances are instead absent within the recycled and deodorized granule or agglomerate.

### Example 2: Qualitative analysis of the presence of odorous volatile and/or semi-volatile substances in the deodorized recycled granule or agglomerate according to the present invention and in a recycled but non-deodorized granule or agglomerate; (PP).

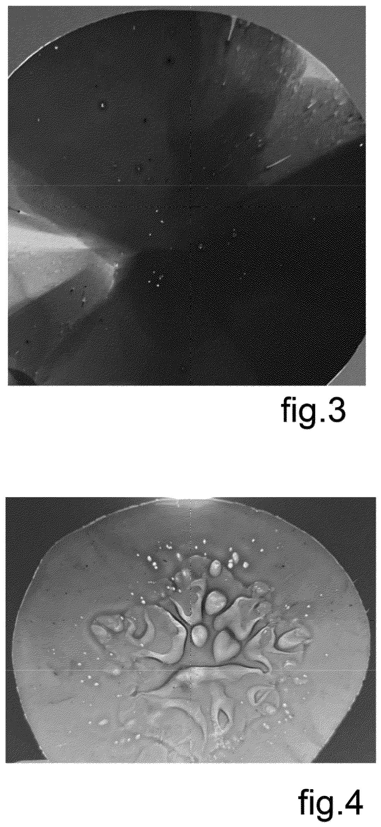

With reference to Fig. 2, a recycled but non-deodorized granule or agglomerate, in particular recycled but non-deodorized polypropylene, is shown in the form of a disk pressed with a force of 20 kN (the disk thus obtained has a thickness of 100 µm). From Fig. 2 it is evident that there are clear inclusions present within the recycled but non-deodorized polypropylene; the clear inclusions are gas particles, in particular particles of odorous volatile and/or semi-volatile substances included within the recycled but non-deodorized polypropylene. With reference to Fig. 3, on the other hand, a deodorized recycled granule or agglomerate according to the present invention is shown, in particular deodorized recycled polypropylene, in the form of a disk pressed with a force of 20 kN (the disk thus obtained has a thickness of 100 µm). From Fig. 3, it is evident that the structure of the granule or agglomerate according to the present invention is homogeneous; in fact, there is no presence of clear inclusions, i.e., of odorous volatile and/or semi-volatile substances; the structure of the entire disk is in fact homogeneous. The granule or agglomerate according to the present invention therefore demonstrates that it is advantageously homogeneous from a structural point of view because it is clear from Fig. 3 that the granule or agglomerate according to the present invention possesses structural homogeneity by not having inclusions of odorous volatile and/or semi-volatile substances.

### Example 3: Qualitative analysis of the presence of odorous volatile and/or semi-volatile substances in the deodorized recycled granule or agglomerate according to the present invention and in a recycled but non-deodorized granule or agglomerate; (HDPE).

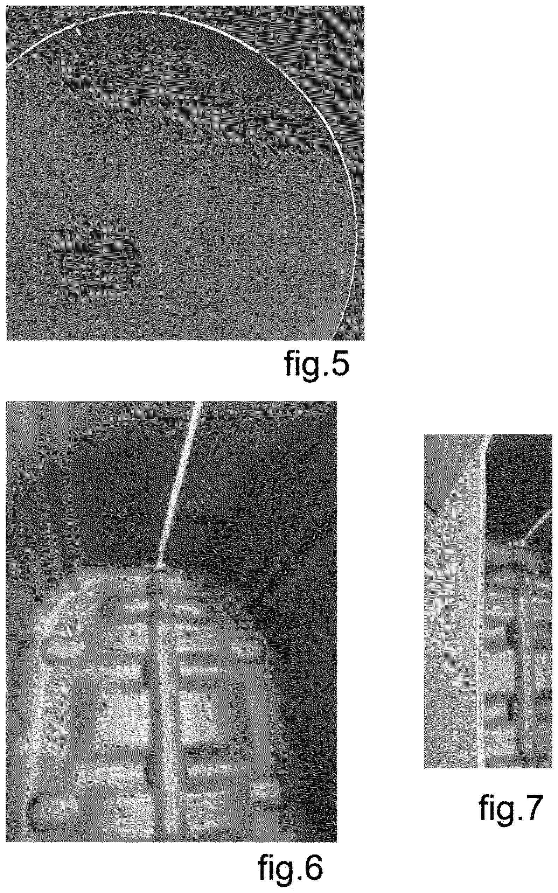

With reference to Fig. 4, a recycled but non-deodorized granule or agglomerate is shown, in particular recycled but non-deodorized high-density polyethylene (HDPE), in the form of a disk pressed with a force of 20 kN (the disk thus obtained has a thickness of 100 µm). From Fig. 4 it is evident that there are clear inclusions present within the recycled but non-deodorized HDPE; the clear inclusions are gas particles, in particular particles of odorous volatile and/or semi-volatile substances included within the recycled but non-deodorized HDPE. With reference to Fig. 5, on the other hand, a deodorized recycled granule or agglomerate according to the present invention is shown, in particular deodorized recycled HDPE, in the form of a disk pressed with a force of 20 kN (the disk thus obtained has a thickness of 100 µm). From Fig. 5 it is evident that the structure of the granule or agglomerate according to the present invention is homogeneous; in fact, there is no presence of clear inclusions, i.e., of the odorous volatile and/or semi-volatile substances; the structure of the entire disk is in fact homogeneous. The granule or agglomerate according to the present invention therefore demonstrates that it is advantageously homogeneous from a structural point of view, because it is clear from Fig. 5 that the granule or agglomerate according to the present invention possesses structural homogeneity by not having inclusions of odorous volatile and/or semi-volatile substances.

### Example 4: Production of plastics materials, in particular tanks, using the deodorized recycled granule or agglomerate according to the present invention; (HDPE).

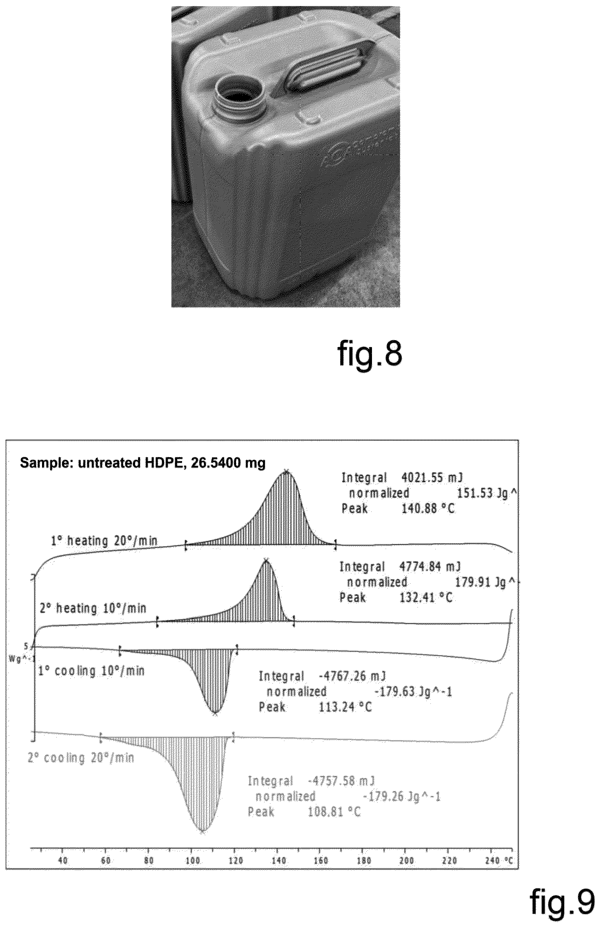

Fig. 6 shows an inner wall of a tank obtained using the deodorized recycled granule or agglomerate according to the present invention, in particular deodorized recycled high-density polyethylene (HDPE). The tank of Fig. 6 is a tank having a capacity of 20 liters and was obtained by means of the technique of blowing by extrusion by means of three-layer coextrusion (process temperature 170°C) (Fig. 7) with a thickness of (compared to the total): 15% for the inner layer, 55% for the intermediate layer and 30% for the outer layer. The composition of the innermost layer comprises 100% by weight of virgin HDPE, the intermediate layer comprises 100% by weight of deodorized recycled HDPE according to the present invention, and the outer layer comprises 100% by weight of virgin HDPE. Fig. 8, on the other hand, shows the exterior of a tank obtained using the deodorized recycled granule or agglomerate according to the present invention, in particular deodorized recycled high-density polyethylene (HDPE). The tank of Fig. 8 is a tank having a capacity of 20 liters and was obtained by means of the technique of blowing by extrusion by means of coextrusion (process temperature 170°C) with three layers having thicknesses of: 15% for the inner layer, 55% for the intermediate layer and 30% for the outer layer. The composition of the innermost layer comprises 100% by weight of virgin HDPE, the intermediate layer comprises 100% by weight of deodorized recycled HDPE according to the present invention, and the outer layer comprises 100% by weight of deodorized recycled HDPE.

### Example 5: Thermo-rheological analysis of a deodorized recycled granule or agglomerate according to the present invention and a recycled but non-deodorized granule or agglomerate.

A thermo-rheological characterization was performed for samples of deodorized recycled high-density polyethylene (HDPE) according to the present invention, recycled but non-deodorized HDPE, deodorized recycled polypropylene (PP) according to the present invention and recycled but non-deodorized PP.

The following analyses were performed on all samples
- the thermal analysis, differential scanning calorimetry (DSC), was performed with a Mettler-Toledo model 821e calorimeter in a temperature range between 25°C and 250°C under nitrogen flow with the following thermal cycle:
   ∘ first heating: from -65°C to 250°C at a speed of 20°/min;
   ∘ first cooling: from 250°C to -65°C at a speed of 10°/min;
   ∘ second heating: from -65°C to 250°C with a speed of 10°/min;
   ∘ second cooling: from 250°C to -65°C at a speed of 20°/min;
- the flow curve at a temperature of 220°C was made at high shear rate values using a Göttfert Rheo-Tester model 2000 capillary rheometer equipped with a 10/1 capillary (length 10 mm and diameter 1 mm) and a 1000 bar pressure transducer;
- the self-supporting capacity of the polymer in the molten state (melt strength) was measured with a Rheotens extensional rheometer 71.97 (Goettfert) fed at the temperature of 220°C by a Rheo-2000 capillary rheometer (Goettfert) equipped with a 30/2 (L/D) capillary setting a shear rate of 28.8 s-1. The distance between the wheels is 0.4 mm, and an acceleration of 30 mm/s2 was set.

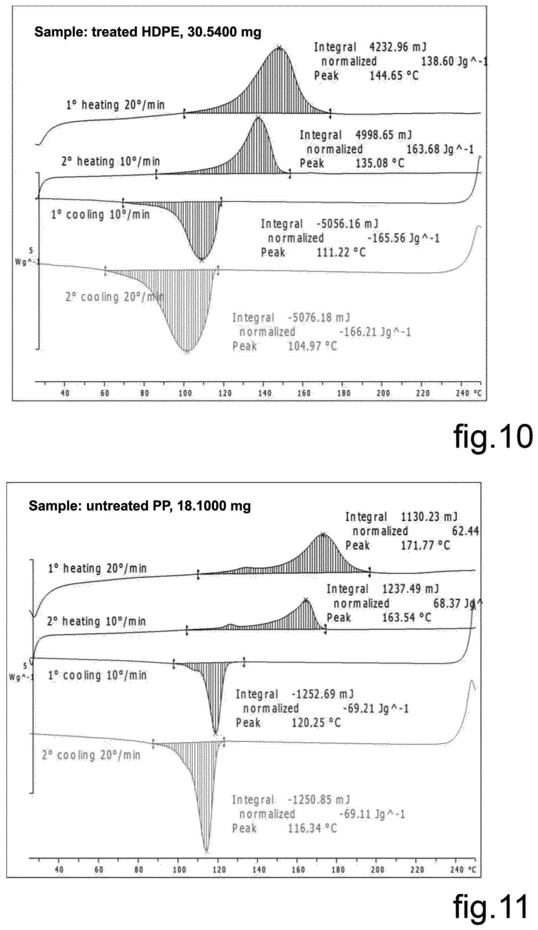

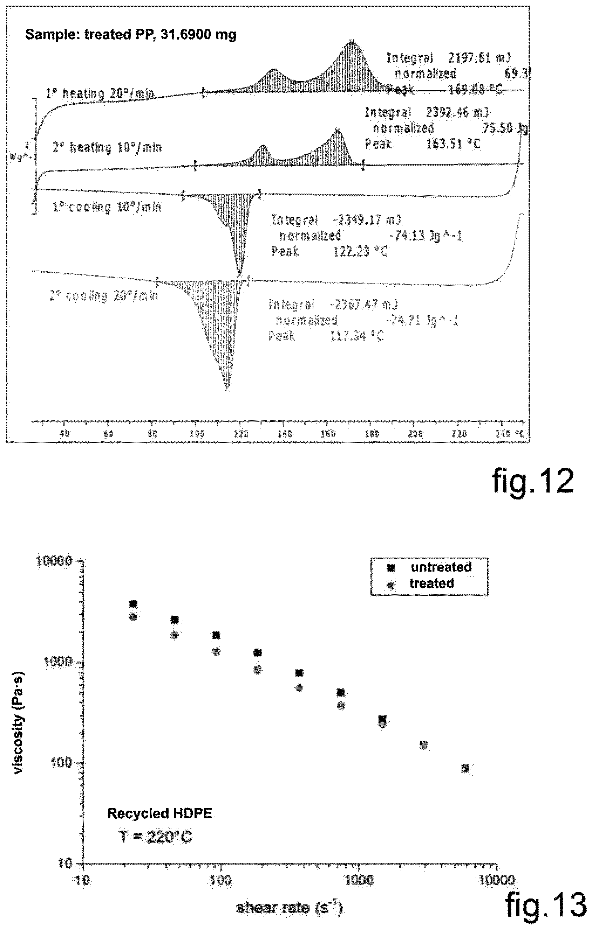

Fig. 9-13 show the DSC thermograms of the four analyzed samples. In particular: Fig. 9 shows a DSC thermogram of the non-deodorized recycled HDPE sample; Fig. 10 shows a DSC thermogram of the deodorized recycled HDPE sample according to the present invention; Fig. 11 shows a DSC thermogram of the non-deodorized recycled PP sample; Fig. 12 shows a DSC thermogram of the deodorized recycled PP sample according to the present invention.

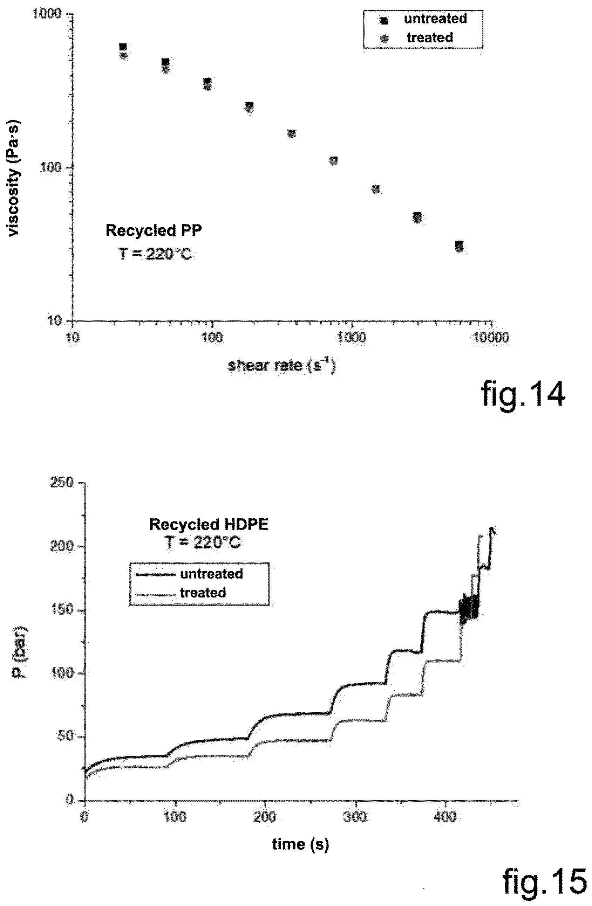

Fig. 13 and 14 show the flow curves of the four analyzed samples. In particular: Fig. 13 shows the flow curves at 220°C of the recycled but non-deodorized HDPE samples and deodorized recycled HDPE according to the present invention; Fig. 14 shows the flow curves at 220°C of the non-deodorized recycled PP samples and deodorized recycled PP samples according to the present invention.

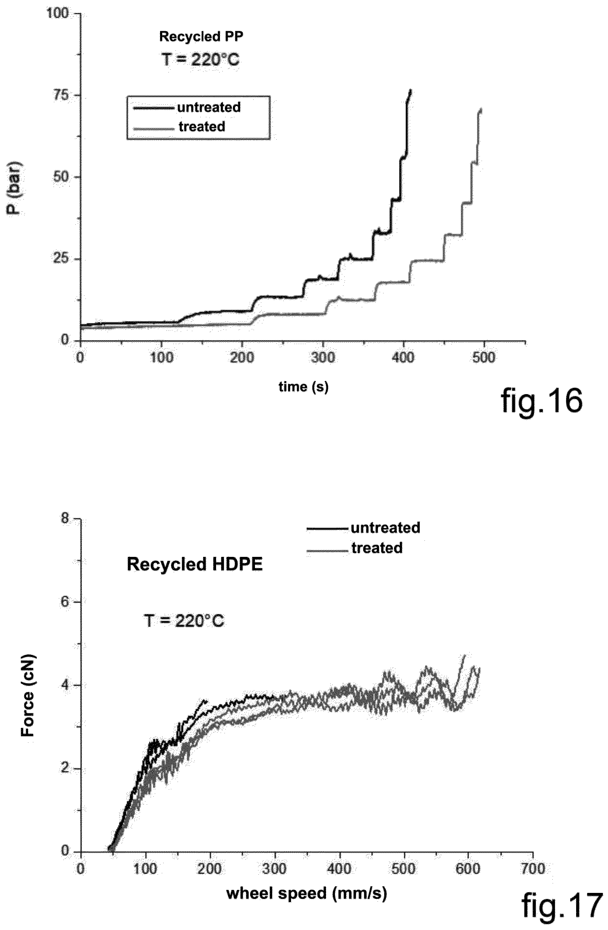

Fig. 15 and 16 show the pressure trends recorded during the rheological measurements of the four analyzed samples. In particular: Fig. 15 shows the pressure trend recorded during rheological measurements at 220°C of the non-deodorized recycled HDPE and deodorized recycled HDPE samples according to the present invention; Fig. 16 shows the pressure trend recorded during the rheological measurements at 220°C of the non-deodorized recycled PP and deodorized recycled PP samples according to the present invention.

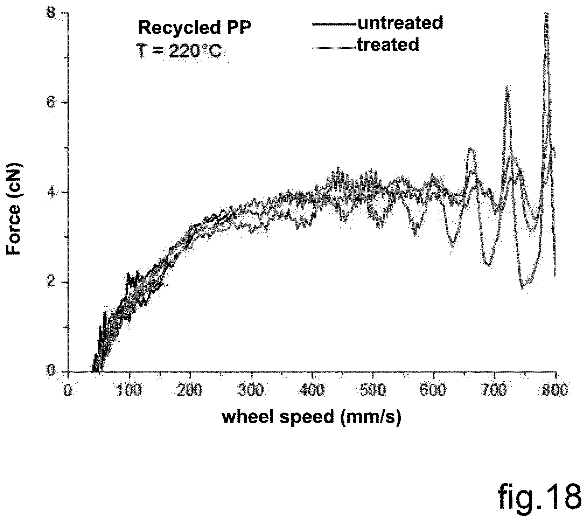

Fig. 17 and 18 show the curves of the self-supporting capacity of the four analyzed samples in the molten state (melt strength). In particular: Fig. 17 shows the melt strength at 220°C of the recycled but non-deodorized HDPE and deodorized recycled HDPE samples according to the present invention; Fig. 18 shows the melt strength at 220°C of the recycled but non-deodorized PP and deodorized recycled PP samples according to the present invention.

From the graphs of Fig. 9-18, it is evident that the thermal characteristics (temperatures and melting enthalpies) of the deodorized recycled samples according to the present invention and of the non-deodorized recycled samples are similar. In contrast, the rheological measurements advantageously show significant differences. In particular, although the viscosity measurements are similar even if the deodorized recycled samples according to the present invention have slightly lower viscosities, probably due to partial degradation with a decrease of molecular weight during treatment, the pressure oscillations are much more pronounced for the recycled but non-deodorized samples. This indicates greater homogeneity of the deodorized recycled samples according to the present invention. At the same time, the maximum elongation of the melt is advantageously much higher for deodorized recycled samples according to the present invention. This measurement, which is extremely important for processing materials by extrusion and blowing by extrusion techniques, confirms that the deodorized recycled compounds according to the present invention have an increased structural homogeneity and processability index compared to equivalent recycled but non-deodorized compounds.

The deodorized recycled granule or agglomerate according to the present invention is therefore, advantageously, a granule or agglomerate that is both homogeneous from a structural point of view and provided with a good processability index. These characteristics advantageously make it an easy-to-process granule or agglomerate, both in extrusion processes and in extrusion molding or extrusion blow-molding processes. The deodorized recycled granule or agglomerate according to the present invention is preferably, but not exclusively, obtained by the process described in EP4180465.

The granule or agglomerate according to the present invention therefore has the advantage of being a granule or agglomerate provided with better processability than an identical recycled (by means of a conventional recycling process) but non-deodorized granule or agglomerate. This characteristic results in an advantage for the supply chain in the processing of recycled materials. The advantageous characteristic of the granule or agglomerate according to the present invention having a concentration of volatile and/or semi-volatile substances between 0.01% by weight and 0.40% by weight advantageously allows the granule or agglomerate according to the present invention to have better processability than an identical recycled but non-deodorized granule or agglomerate, thus making the granule or agglomerate according to the present invention more easily processable and therefore more workable (for example, but not only, during the extrusion step) within any manufacturing process.

The granule or agglomerate according to the present invention has also advantageously demonstrated an additional advantageous property: when the granule or agglomerate according to the present invention is used for the production of plastics materials (e.g., tanks or containers, such as those of the aforementioned Example 4), these plastics materials have been shown to be easily and homogeneously colorable. The plastics materials obtained from the granule or agglomerate according to the present invention have in fact been shown to be easily colorable plastics materials which are able to allow a homogeneous diffusion of color within the whole of their material.

This aspect is particularly advantageous when the granule or agglomerate according to the present invention is used for the production of the outermost layer of a plastics material, such as a tank or a container. The property of the granule or agglomerate according to the present invention of being easily and homogeneously colorable advantageously makes it possible to save on color (i.e., both processing time and production cost), because by virtue of this property it will be sufficient to color only the outer layer of the tank or container (and therefore not also the inner layer and any intermediate layer), thus obtaining a tank or container colored externally (and therefore visually and aesthetically) in a homogeneous manner without necessarily also having to color the layers inside the tank or container, thus saving on production time and costs.

## Claims

1. Deodorized recycled granule or agglomerate comprising
a deodorized recycled polymer, a coloring substance and a virgin polymer;
wherein the deodorized recycled polymer is present in a concentration of between 100% by weight and 30% by weight, the coloring substance is present in a concentration of between 0% by weight and 5% by weight, and the virgin polymer is present in a concentration of between 0% by weight and 65% by weight, the % being expressed in relation to the total weight of the granule or agglomerate;
wherein the deodorized recycled polymer comprises a concentration of volatile and/or semi-volatile substance, preferably odorous, of between 0.01% by weight and 0.40% by weight, the % being expressed in relation to the total weight of the deodorized recycled polymer.

2. Granule or agglomerate according to claim 1, wherein the deodorized recycled polymer is selected from: deodorized recycled high-density polyethylene, deodorized recycled polypropylene, deodorized recycled low-density polyethylene, deodorized recycled polystyrene or mixtures thereof.

3. Granule or agglomerate according to claim 1 or 2, wherein the virgin polymer is selected from: high-density polyethylene, polypropylene, low-density polyethylene, polystyrene or mixtures thereof.

4. Granule or agglomerate according to any one of claims 1 to 3, wherein the coloring substance is selected from: pigment, dye or mixtures thereof.

5. Granule or agglomerate according to any one of claims 1 to 4, wherein the deodorized recycled polymer is present in a concentration of between 95% by weight and 30% by weight, the coloring substance is present in a concentration of 5% by weight, and the virgin polymer is present in a concentration of between 0% by weight and 65% by weight, the % being expressed in relation to the total weight of the granule or agglomerate.

6. Granule or agglomerate according to any one of claims 1 to 5, wherein the deodorized recycled polymer is present in a concentration of between 70% by weight and 30% by weight, the coloring substance is present in a concentration of 5% by weight, and the virgin polymer is present in a concentration of between 25% by weight and 65% by weight, the % being expressed in relation to the total weight of the granule or agglomerate.

7. Granule or agglomerate according to any one of claims 1 to 6, wherein the deodorized recycled polymer is present in a concentration of between 50% by weight and 30% by weight, the coloring substance is present in a concentration of 5% by weight, and the virgin polymer is present in a concentration of between 45% by weight and 65% by weight, the % being expressed in relation to the total weight of the granule or agglomerate.

8. Granule or agglomerate according to any one of claims 1 to 4, wherein the deodorized recycled polymer is present in a concentration of 100% by weight, the % being expressed in relation to the total weight of the granule or agglomerate.

9. Granule or agglomerate according to any one of claims 1 to 5, wherein the deodorized recycled polymer is present in a concentration of 95% by weight, and the coloring substance is present in a concentration of 5% by weight, the % being expressed in relation to the total weight of the granule or agglomerate.

10. Granule or agglomerate according to any one of claims 1 to 6, wherein the deodorized recycled polymer is present in a concentration of 70% by weight, the coloring substance is present in a concentration of 5% by weight, and the virgin polymer is present in a concentration of 25% by weight, the % being expressed in relation to the total weight of the granule or agglomerate.

11. Granule or agglomerate according to any one of claims 1 to 7, wherein the deodorized recycled polymer is present in a concentration of 50% by weight, the coloring substance is present in a concentration of 5% by weight, and the virgin polymer is present in a concentration of 45% by weight, the % being expressed in relation to the total weight of the granule or agglomerate.

12. Granule or agglomerate according to any one of claims 1 to 7, wherein the deodorized recycled polymer is present in a concentration of 30% by weight, the coloring substance is present in a concentration of 5% by weight, and the virgin polymer is present in a concentration of 65% by weight, the % being expressed in relation to the total weight of the granule or agglomerate.

13. Use of the deodorized recycled granule or agglomerate according to any one of claims 1 to 12, for the production of plastics materials.
